# EUROPEAN PATENT APPLICATION

(11) **EP 0 535 388 A1**
(43) Date of publication of application: **07.04.1993**
(21) Application number: 92114990.2
(22) Date of filing: 02.09.1992
(51) Int. Cl.: C03B 19/06, C03B 32/00

(54) **A blank member and a glass optical element and processes for manufacturing them**

(30) Priority: 03.09.1991 JP 250530/91; 19.03.1992 JP 93804/92
(71) Applicant: KONICA CORPORATION, Tokyo 163 (JP); NITTO CHEMICAL INDUSTRY CO., LTD., Tokyo (JP)
(72) Inventor: Hosoe, Shigeru, Hachioji-shi, Tokyo (JP); Higashiogawa, Takashi, Tsurumi-ku, Yokohama-shi, Kanagawa (JP)
(74) Representative: Henkel, Feiler, Hänzel & Partner

(57) **Abstract**

The process for manufacturing the blank member comprises the steps of: press-forming powder of optical material into a desired blank shape, or mixing powder of optical material with water to make a slurry and casting said slurry into a water-absorptive casting die to form a desired blank shape; and thereafter sintering the shape. The blank member thus obtained by the process comprises optical glass material packed in the space between grains. The process for manufacturing the glass optical element comprises the step of: press-forming the blank member into a desired shape while heating, or grinding and lapping the blank member into a desired shape; the optical glass material thus obtained by the process comprises optical glass material packed in the space between grains.

## Description

### BACKGROUND OF THE INVENTION

### 1.Field of the Invention

The present invention relates to a blank member and a glass optical element and processes for manufacturing them.

### 2.Description of the Prior Art

In the prior art, optical elements made of glass such as lenses, prisms etc. have been manufactured in such a manner disclosed in Japanese Patnet Publication No. HEI-2-50059 that a blank member as a preform for a glass optical element is heated and then pressure-formed into a product.

In order to form the above-said blank member, there have been used two processes as follows.
① A block of optical glass called gob is cut out and ground or machined into a desired size and shape.
② Molten optical glass material as a primary hot forming product is directly subjected to a press-forming.

With these processes, blanks having spherical, disc-like, lens-like and other shape have been formed in accordance with the finishing shape of a desired glass optical elements.

In the above-stated method ①, blank members having high dimensional accuracy (specifically, volume accuracy) can be obtained, and this allows the resultant glass optical element formed from the blank member to have a high shape appearance quality. Therefore, the product advantageously needs no after-treatment. On the other hand, this method, however, causes a deteriorated zone (having fine cracks and nicks) to arise deep inside the gob when it is cut. This requires a wide margin to be taken for cutting out the gob, so that the bulk of the gob to be removed when it is machined must be large. As a result, this method has a drawback that the productivity is low and the cost is high.

In contrast, the other method ② allows the blank members to be formed in a high yield with low cost, but the formed blanks vary widely about 10% in volume resulting in lack of uniformity in size. For this reason, a metal die for press-forming a glass optical element needs to be structured with a clearance for mold extrusion through which the mold cavity is allowed to communicate with the outside atmosphere. And, a glass optical element formed by the extrusion forming requires an after-process, that is, to be grounded, polished or machined in order to keep the shape appearance quality constant. Accordingly, the total cost of obtaining a glass optical element as a product becomes high, resulting in a low yield. Still more, if the formed glass optical element is a lens, the extruded portion thereof will be located in a peripheral part of the lens to which a reference plane for attachment and embedment is arranged, so that the degree of extrusion in the extruded portion, and the cutting and grinding of the extruded portion have a significant influence upon the mutual precision between the reference plane and optical surface. This makes the process more troublesome.

### SUMMARY OF THE INVENTION

The present invention has been made in view of the above-described circumstances, and it is an object of the present invention to provide a blank member and a glass optical element and processes for manufacturing them which allow the manufacture of the blank member and the glass optical element from the blank as a whole to be made with a high yield at low cost.

In order to achieve the above object, according to the first aspect of the present invention, there is provided a blank member comprising optical glass material packed in the space between grains.

Further, in order to achieve the above object, according to the second aspect of the present invention, there is provided a glass optical element comprising optical glass material packed in the space between grains.

Furthermore, in order to achieve the above object, according to the third aspect of the present invention, there is provided a first process for manufacturing a blank member comprising the steps of: press-forming powder of optical material into a desired blank shape; and sintering the shape.

Still more, in order to achieve the above object, according to the fourth aspect of the present invention, there is provided a second process for manufacturing a blank member comprising the steps of: mixing powder of optical material with water to make a slurry; casting the slurry into a water-absorptive casting die to form a desired blank shape; and sintering the shape.

Still more, in order to achieve the above object, according to the fifth aspect of the present invention, there is provided a first process for manufacturing a glass optical element comprising the step of: press-forming a blank member into a desired shape while heating, the blank member being one stated in the first aspect or one manufactured by either process stated by the above third or fourth aspect.

Still more, in order to achieve the above object, according to the sixth aspect of the present invention, there is provided a second process for manufacturing a glass optical element comprising the step of: grinding and lapping a blank member into a desired shape, the blank member being one stated in the first aspect or one manufactured by either process stated by the above third or fourth aspect.

As an embodiment of the blank member according to the above first aspect, the optical glass material preferably consists of SiO₂.

As an embodiment of the glass optical element according to the above second aspect, the optical glass material preferably consists of SiO₂.

As an embodiment of the first process for manufacturing a blank member according to the above third aspect, it is preferable that:
① the press-forming is effected by the hydrostatic pressurization process;
② the press-forming is effected by the cold isotropic pressure forming (CIP); and
③ the press-forming is effected in a metal or rubber die being filled up with the above-said powder of optical glass material.

As an embodiment of the first or second process for manufacturing a blank member according to the above third and fourth aspects, it is preferable that:
① the above-said powder of optical glass material is of SiO₂ powder;
② the above-said sintering is effected by the hot hydrostatic pressure pressing process;
③ the above-said sintering is effected by the hot isotropic pressure forming (HIP); and
④ the above-said sintering is effected using a vacuum furnace and/or an atmospheric furnace.

As an embodiment of the first process for manufacturing a glass optical element according to the above fifth aspect, it is preferable that:
① the above-said powder of optical glass material is of SiO₂ powder;
② the above-said press-forming is effected by the hydrostatic pressurization process;
③ the above-said press-forming is effected by the cold isotropic pressure forming (CIP);
④ the above-said press-forming is effected in a metal or rubber die being filled up with the powder of optical glass material; and
⑤ the above-said heating is effected at a temperature higher than the softening point of the optical glass material by 30°C or more.

As an embodiment of the second process for manufacturing a glass optical element according to the above fourth aspect, it is preferable that:
① the above-said water-absorptive casting die is of a porous casing die; and
② the above-said porous casting die has a convex portion formed around the periphery of the cavity and a gate is arranged in, and facing the opposite side of, the convex portion.

As an embodiment of the process for manufacturing a glass optical element according to the above sixth aspect, it is preferable that the above-said powder of optical glass material is of SiO₂ powder.

According to the present invention, the powder of optical glass material is press-formed or cast into a desired blank shape and then sintered. With this procedure, it is possible to obtain a blank member having a high dimension accuracy and a high uniformity without executing machining process which would require a large bulk of removal of material and thereby resulting in high cost. As a result, only press-forming or grinding and lapping the thus obtained blank member into a desired shape in a simple manner, makes it possible to produce a glass optical element having as a good performance as that manufactured by the conventional process.

Therefore, according to the present invention, a blank member can be obtained at low cost which has a high dimensional and voluminal accuracy, a uniformity free from striae and no process-affected layer, without executing any after-treatment such as grinding, lapping and the like.

Moreover, since a glass optical element is formed from the blank member, there is no need to effect an extrusion forming which might require a complicated after-treatment. Therefore, the number of processing steps and processing time are reduced largely and the amount of bulk to be removed or machined is lessened extremely, so that it is possible to realize a whole process from a blank member to complete a glass optical element in a high yield at low cost.

The aforementioned and other objects, aspects and advantages of the present invention will become clear to those skilled in the art by reference to the following description in which preferred embodiments are detailed in accordance with the principle of the invention, in connection with the accompanying drawing.

### BRIEF DESCRIPTION OF THE DRAWINGS

Fig. 1 is a flowchart showing an example of a process for manufacturing a blank member and a glass optical element according to the present invention;
Fig. 2 and Fig.3 are photographs taken by an electron microscope respectively showing the grain structures in a blank member and a glass optical element of the present invention;
Fig.4 is a flowchart showing another example of a process for manufacturing a blank member and a glass optical element according to the present invention;
Figs.5 and 6 are schematic sectional views showing examples of the porous casting die suitable for manufacturing a blank member and a glass optical element of the present invention;
Fig.7 is an illustration for explaining a way of measurement of internal homogeneity of a glass optical element of the present invention;
Fig.8 is a photograph of interference fringes of the wave front of transmitted wave through the inside of a SiO₂ glass optical element of the present invention, obtained in accordance with the measurement shown in Fig.7;
Fig.9 is a graph showing a transmittance spectrum of a SiO₂ glass optical element according to the present invention; and
Fig.10 is a graph showing transmittance spectra of glass optical elements which are prepared from quartz glass material.

### DETAILED DESCRIPTION OF THE PREFERRED EMBODIMENTS

Some of preferred embodiments according to the present invention will be described in detail with reference to the accompanying drawings.

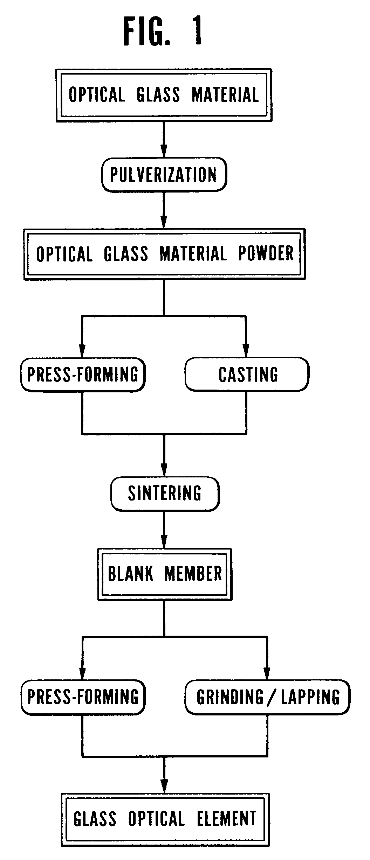

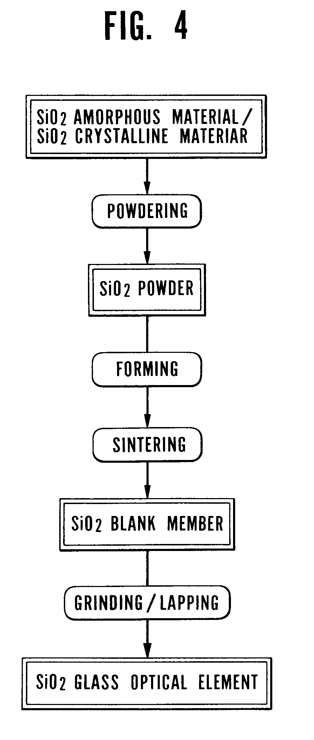

Figs.1 and 4 show two flowcharts each showing different process of manufacturing a blank member and a glass optical element according to the present invention.

Firstly, for obtaining powder of optical glass material, any of conventional methods can be applied which include, for example, the pulverization method, the sol-gel process, the process in which powder SiO₂ is made by sintering metal SiO₂ powder and the process in which soot-like SiO₂ powder is obtained by burning silicon tetrachloride with oxyhydrogen flame. Of these methods the most popular and easiest one is pulverization method. Therefore, the way of obtaining the powder of optical glass material by pulverization will be first described hereinafter. At first, the optical glass material is primarily pulverized up to 5 to 15µ m in mean particle radius by a pulverizer. Then, thus pulverized grains are secondarily ground into powder to the degree in which the heterogeneity in the grains does not affect upon optical behavior, or specifically up to 2 to 3µ m or less in mean particle radius. The degree of pulverization of the powder of the optical glass material is determined depending upon the required precision of the glass optical element as a final product. Therefore, in some cases if powder is used for a glass optical element restricted to a sever precision criteria, as in a laser optical system, the powder should be pulverized to 1µ m or less in mean particle radius. In other cases, the mean particle radius may be allowed to be 3µ m or more in contrast with the above case. When the powder is ground to 2µ m or less in mean particle radius, the powder tends to aggregate due to the mutual adhesion between particles, thus lowering the efficiency of pulverization. To deal with such the case, it is preferable to use the wet pulverization. Note that the mean particle radius referred to heretofore is a radius of a sphere having the same volume with that of a powder particle.

The pulverized optical glass material refers to a optical glass material used for glass optical element, and particularly SiO₂ amorphous material or SiO₂ crystalline material is used for laser optical systems and other glass optical elements which are restricted to a sever precision criteria. It is possible to reuse material including striae as long as it hardly includes impurity content. The purity is normally demanded 99.99% or more. Therefore, the instruments used for pulverization are preferably made of, for example, the same optical glass material, in order to prevent the powder from being polluted with foreign substances. It may be allowed to add a proper amount of different kind of optical glass material powder to the pulverized optical glass material powder as the optical characteristics demand.

With respect to the sol-gel process, alkoxy substituted organosilane is hydrolyzed in an alkali solution and condensation-polymerized to obtain SiO₂ particles. With this method, it is possible to make the grains of the powder relatively uniform in size and form into a near sphere. Still, it has a drawback that the alkali component is hard to remove in the neutralization process, thereby leaving impure content mixed. For this reason, this method may bring about problems of absorption and fluorescence particularly to the optical elements to which ultraviolet light is applied.

With respect to the method in which metal Si powder is sintered to make a SiO₂ powder, metal Si powder known as "ADMAFINE" (Trade Name by ADMATEX CO., LTD.) is burned at about 4000 °C to produce a SiO₂ powder. With this method, it is possible to readily make a submicron powder. Metal Si is powdered simply for increasing the surface area to improve the combustion efficiency, so that there is no special need to grind the metal very fine. With this method, it is possible to obtain SiO₂ powder material at low cost which is pure enough and has an enough fair diameter to be applied to the present invention.

The thus pulverized optical glass material powder is formed into a desired blank shape. The blank member may be formed into a sphere, disc lens-like shape, or various other shape in accordance with the final shape of a desired glass optical element. But the blank member is preferably spherical in view of weight control, transportation cost, formability and other aspects. Upon the forming of the blank member, the pulverized optical glass material powder is preferably regulated in particle diameter by a filter or other means before the formation of the blank, in order to attain optical homogeneity.

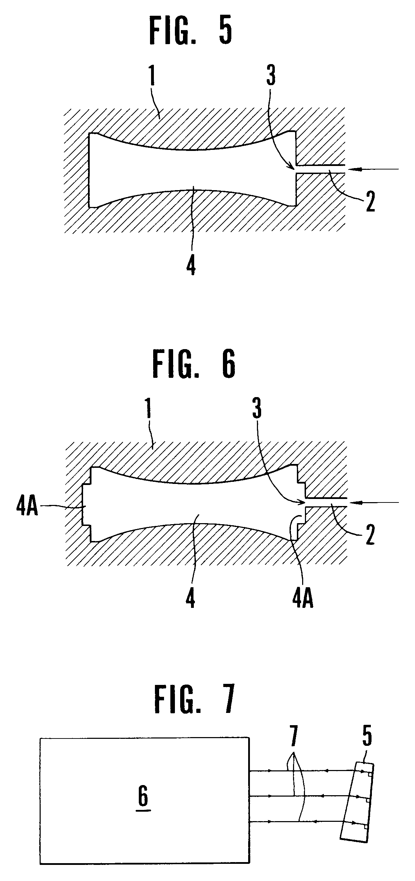

There are two methods for forming the optical glass powder into a blank shape, one of which is press-forming method and the other of which is a casting method wherein the SiO₂ powder as an optical glass material powder is mixed with water into a slurry and thus formed slurry is cast into a water-absorptive die, i.e., a porous die 1 as shown in Fig.5. It should be noted that even in the case of the press-forming, in accordance with cases, specifically the type of the optical glass material, the particle diameter of the powder, and other conditions, water may be added to the powder to make a slurry, which is, in turn, cast in a die for press-forming.

In the case of press-forming, if the pressing is effected uniaxially, the inside air bubbles and water tend to escape in one direction, and this causes the pressed blank member to form a lamellar structure. Therefore, the press-forming is preferably carried out by the static or isotropic pressurization so that the pressure is exerted isotropically. Means for static or isotropic pressurization is arranged by a resilient member such as rubber, or by any of other well known methods. In addition to the above-mentioned press-forming, there can be employed general dry-forming techniques such as metal-die press-forming, rubber press-forming and the like. The metal-die press-forming is particularly suitable for a disc-shaped blank, and the rubber forming is suitable for a spherical blank. In these dry formings, either the optical glass material powder itself can be formed, or water may be added to the powder to make a slurry, and then the slurry is formed into an aggregate by the spray dry method or etc., to be pressed.

The porous die 1 used for casting can be composed by, for example, a porous resin. The slurry-like optical glass material is fed into a cavity 4 having an aforementioned desired shape from a gate 3 through a sprue or runner 2 with a pressure of several atm., specifically, for example, 2 to 10 atm. The thus fed slurry-like optical glass material is solidified while water is absorbed through the fine pores on the surface of the cavity 4. Here, in order to prevent the blinding of the slurry-like optical glass material, the fine pores of the sprue or runner 2 are preferably filled up. When a blank shape is concave like this embodiment, the center portion of the cavity 4 is narrowed, so that a grown and solidified block in the same thickness of the optical glass material may obstruct the flow of the slurry-like optical glass material. For this reason a hollow is liable to form in an area far from the gate 3. To prevent this, a convex portion 4A is formed on the peripheral side of the cavity 4 of the porous die as shown in Fig.6. With this structure, the flow of the slurry-like optical glass material fed into the cavity 4 can be assured so that it is possible to prevent the aforementioned hollow from appearing. In this case, the convex portion 4A on the peripheral side of the cavity 4 functions as a slug well, it also prevents the formation of flow marks, short shots and the like.

In the next step, the formed material into the blank shape is sintered as it is. In sintering, the formed material may form a lamellar structure thereinside due to air bubble or water. In order to prevent this and make the inside uniform, the material is preferably sintered while compressed from every direction using a pressure medium such as inert gas (Ar, He, etc.) by the hot hydrostatic press method i.e. the hot isotropic pressure forming method (HIP method). It is also possible and preferable to sinter the material using a vacuum furnace and/or an atmospheric furnace. In particular, according to the HIP method, it is possible to sinter the material with keeping variation in composition small. Therefore the method is effective when the optical glass material contains a material having a low vapor pressure such as lead, fluorine, etc. It is also important in sintering to gradually defoam the optical glass material powder by collecting air bubbles existing in the powder as much as possible. To achieve this, it is markedly effective either to replace air bubbles with a transparent or translucent liquid, for example, water, or to heat the powder material in plural steps each having a different temperature.

The sintering temperature is set up properly dependent upon the type of the optical glass material. For example, quartz glass may be sintered at about 1400°C , and a glass material may be sintered normally at about 500 to 800 °C or 900 °C . In general, the sintering temperature is to be set within a range of ± 100 to 150°C around a softening point of an optical glass material to be used. In this connection, in heating the material, the heating condition may be varied properly in accordance with the type of the optical glass material. That is, the material may be sintered under a constant temperature, or with the temperature being varied in plural steps, or with the temperature being raised or lowered gradually. When sintered, the optical glass material formed into a blank shape may be supported by graphite to prevent the glass material from sticking.

According to the process described heretofore, a blank member as a preform for a glass optical element can be formed. In accordance with the foregoing process of the present invention, several thousands of blank members can be formed having a uniform volume and shape at once, even in the batch process. Therefore, it is possible to largely reduce the cost compared to the conventional process in which a block of optical glass called gob is cut out and ground or machined into a desired size and shape.

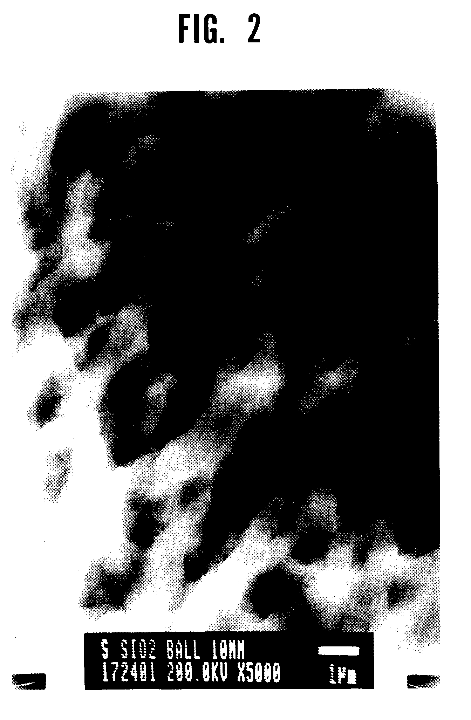

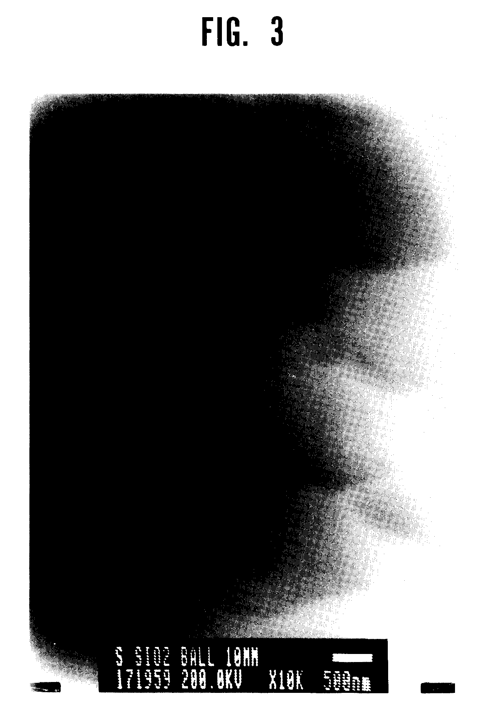

Fig. 2 and Fig.3 are photographs taken by an electron microscope respectively showing the grain structures in a formed blank member and a formed glass optical element. For taking the photographs each specimen of the blank member and the glass optical element was cut out with about 100µ m thick, and then was mirror polished to form a section of about 10 µ m thick. Then a beam of xenon gas ion accelerated by 4KV was irradiated onto the both sides at an incident angle of 80 degrees to form a foil section with about 50Å thick. Further carbon was evaporated to the thus thinned section, which was observed by electron microscope. Fig.2 shows a specimen which was pressurized in a minor axis direction and sintered by the hot press process, whereas Fig.3 shows a specimen which was pressurized statically from every direction and sintered by the hot hydrostatic press process, e.g. hot isotropic pressure forming process (HIP process). As shown in Figs.2 and 3, the blank member formed by the manufacturing process of the present invention is packed with optical glass material, for example, SiO₂ in the space between grains. And the glass optical element formed from the blank member by the after-treatment is also packed with SiO₂ particles in the space between grains.

Next the blank member formed by the process described above is formed into a glass optical element. There are two method to form a glass optical element, one of which is a method in which the blank heated close to the softening point of the optical glass material is press-formed. The other method is combination of grinding and lapping. When the press-forming is employed, the blank member is preferably heated during press-forming at a temperature higher than the softening point of the optical glass material for the purpose of reducing the trace of the optical glass material powder. Specifically the press forming is carried out at a temperature higher than the softening point preferably by 30°C or more, more preferably by 30 to 100 °C.

The blank member of the present invention prepared by the above process is free from striae, having a high uniformity and a high dimension/volume accuracy and no process affected layer, unlike a primary hot forming product which is manufactured by directly pressing molten optical glass material. Moreover the removing part to be machined is very small, so that there is no need for an extrusion forming when the glass optical element is formed. This allows a confined cavity to form a reference plane and optical surfaces simultaneously, thus the number of the processing steps and processing time are largely reduced. Therefore, the whole production can be effected in an extremely high yield with low cost. Moreover, no problem occurs of mutual precision between the reference plane and the optical surface.

Accordingly, it is possible to markedly improve the final yield up to completion of the glass optical element compared to the conventional one.

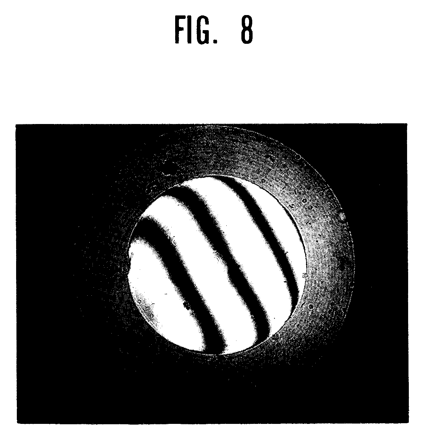

Fig.7 is an illustration for explaining a measurement of internal homogeneity of a glass optical element, and Fig.8 is a photograph of interference fringes of the wave front of transmitted wave through the inside of a SiO₂ glass optical element, obtained by the measurement shown in Fig.7. In Fig.7, a reference numeral 5 denotes a sample of the glass optical element having a wedge-shape of the present invention, formed by grinding and lapping the blank member of the present invention. A reference numeral 7 defines a beam of light, which is emitted from a Fizeau interferometer 6, passing the front face of the sample 5, incident perpendicularly onto the rear face of the sample 5, reflected thereon to reverse the same path with the incidence to the same Fizeau interferometer 6. The beam of light 7 returned to the Fizeau interferometer 6 bears information upon the homogeneity of refraction index inside the sample 5, and this information is represented as interference fringes. The rear face of the above sample 5 is polished up with the flatness of λ /20 or less, so that non-linearity of the interference fringes directly represents the heterogeneity inside the sample 5. As a result of the measurement, there are observed, as shown in Fig.8, two interference fringes. From the linearity of the two interference fringes, the homogeneity of the sample 5 is assumed to be Δ n ≦ 1.1x 10⁻⁶. There is a trifle bending portion near the periphery. This bending may be attributed to the peripheral falling generated during the lapping, and have nothing to do with the homogeneity.

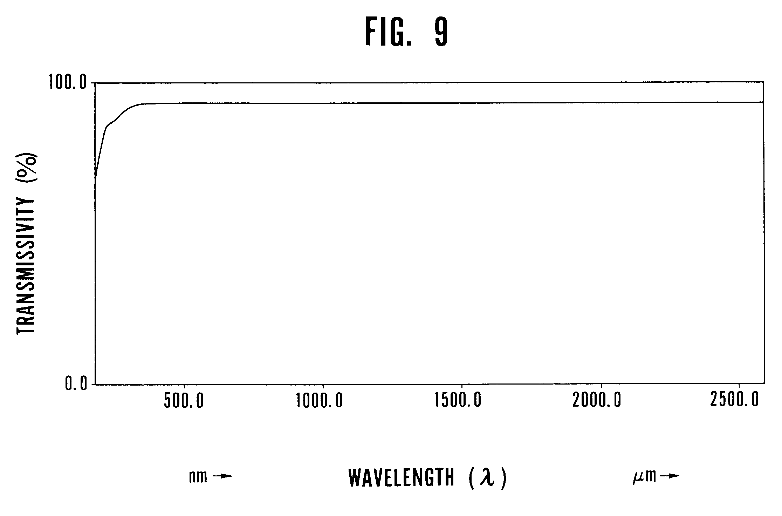

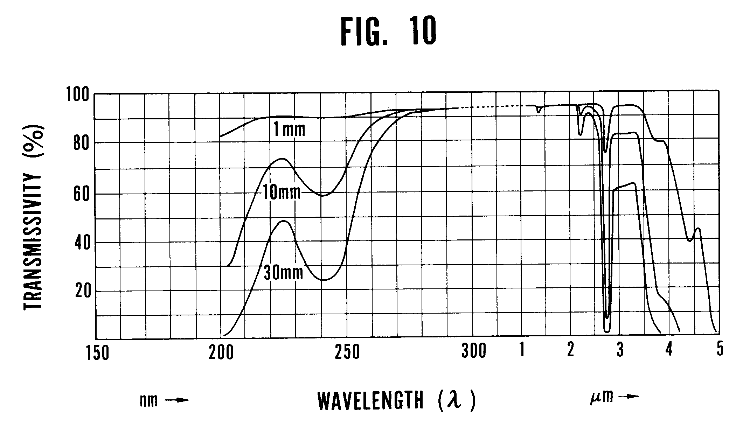

Fig.9 shows a transmissivity spectrum of a SiO₂ glass optical element as a graph and Fig.10 is a graph showing transmissivity spectra of glass optical elements which are formed from conventional quartz glass materials. As is apparent from Fig.9, the SiO₂ glass optical element of the present invention, which employs SiO₂ as an optical glass material, is less absorptive in the ultraviolet and infrared ranges, and exhibits a high transmissivity of the ultraviolet rays. Therefore, the product can be used for photoresist exposure devices such as steppers etc. which have a light source of the ultraviolet rays. Further, no fluorescence arises in the SiO₂ glass optical element of the present invention, so that no sharpness of a formed image is deteriorated. Accordingly, the SiO₂ glass material is suitable for the glass optical elements requiring high precision.

## Claims

1. A blank member comprising optical glass material packed in the space between grains of said optical glass material.

2. A glass optical element comprising optical glass material packed in the space between grains of said optical glass material.

3. A process for manufacturing a blank member comprising the steps of:
press-forming the powder of optical material into a desired blank shape; and
sintering the shape.

4. A process for manufacturing a blank member comprising the steps of:
mixing the powder of optical material with water to make a slurry;
casting said slurry into a water-absorptive casting die to form a desired blank shape; and
sintering the shape.

5. A process for manufacturing a glass optical element comprising the step of:
press-forming a blank member into a desired shape while heating, said blank member being the blank member defined in claim 1 or blank member manufactured by either process defined by claim 3 or 4.

6. A process for manufacturing a glass optical element comprising the step of:
grinding and lapping a blank member into a desired shape, said blank member being the blank member defined in claim 1 or the blank member manufactured by either process defined by claim 3 or 4.

7. A blank member according to claim 1, wherein said optical glass material consists of SiO₂.

8. A glass optical element according to claim 2, wherein said optical glass material consists of SiO₂.

9. A process for manufacturing a blank member according to any one of claims 3 and 4, wherein said powder of optical glass material is of SiO₂ powder.

10. A process for manufacturing a glass optical element according to any one of claims 5 and 6, wherein said powder of optical glass material is of SiO₂ powder.

11. A process for manufacturing a blank member according to claim 3, wherein said press-forming is effected by the hydrostatic pressurization process.

12. A process for manufacturing a blank member according to claim 3, wherein said press-forming is effected by the cold isotropic pressure forming (CIP).

13. A process for manufacturing a blank member according to claim 3, wherein said press-forming is effected in a metal or rubber die being filled up with said powder of optical glass material.

14. A process for manufacturing a glass optical element according to claim 5, wherein said press-forming is effected by the hydrostatic pressurization process.

15. A process for manufacturing a glass optical element according to claim 5, wherein said press-forming is effected by the cold isotropic pressure forming (CIP).

16. A process for manufacturing a glass optical element according to claim 5, wherein said press-forming is effected in a metal or rubber die being filled up with said powder of optical glass material.

17. A process for manufacturing a blank member according to any one of claims 3 and 4, wherein said sintering is effected by the hot hydrostatic pressurization process.

18. A process for manufacturing a blank member according to any one of claims 3 and 4, wherein said sintering is effected by the hot isotropic pressure forming (HIP).

19. A process for manufacturing a blank member according to any one of claims 3 and 4, wherein said sintering is effected using a vacuum furnace and/or an atmospheric furnace.

20. A process for manufacturing a blank member according to claim 4, wherein said water-absorptive casting die is of a porous casing die.

21. A process for manufacturing a blank member according to claim 20, wherein said porous casting die has a convex portion formed around the peripheral portion of the cavity and a gate is arranged in, and facing the opposite side of, said convex portion.

22. A process for manufacturing a glass optical element according to claim 5, wherein said heating is effected at a temperature higher than the softening point of the optical glass material by 30°C or more.
